# EUROPÄISCHE PATENTANMELDUNG

(11) **EP 3 199 877 A1**
(43) Veröffentlichungstag der Anmeldung: **02.08.2017**
(21) Anmeldenummer: 17152751.8
(22) Anmeldetag: 24.01.2017
(51) Int. Cl.: F24F 3/14, F24F 3/147, F24F 12/00

(54) **WÄRMERÜCKGEWINNUNGSSYSTEM**

(30) Priorität: 26.01.2016 AT 500392016
(71) Anmelder: AIT Austrian Institute of Technology GmbH, 1220 Wien (AT); TROGES Gesellschaft für Trocknungs- und Wärmetechnik m.h.H., 1220 Wien (AT)
(72) Erfinder: EMHOFER, Johann, 1220 Wien (AT); FLECKL, Thomas, 1190 Wien (AT); BRAUNEGG, Christof, 1190 Wien (AT)
(74) Vertreter: Gibler & Poth Patentanwälte KG

(57) **Zusammenfassung**

Bei einem Wärmerückgewinnungssystem umfassend eine Wärmerückgewinnungsvorrichtung (1) für eine Lüftungsanlage, wobei die Wärmerückgewinnungsvorrichtung (1) wenigstens einen Wärmeübertragungskreislauf (2) mit wenigstens einem ersten Wärmeübertrager (3) und wenigstens einem zweiten Wärmeübertrager (4) umfasst, wobei der wenigstens eine Wärmeübertragungskreislauf (2) zum Zirkulieren einer Wärmeübertragungsflüssigkeit zwischen dem wenigstens einen ersten Wärmeübertrager (3) und dem wenigstens einen zweiten Wärmeübertrager (4) ausgebildet ist, wobei ein erster Lüftungskanal (5) durch den wenigstens einen ersten Wärmeübertrager (3) führt, wobei ein, vom ersten Lüftungskanal (5) getrennter, zweiter Lüftungskanal (6) durch den wenigstens einen zweiten Wärmeübertrager (4) führt, wird vorgeschlagen, dass der wenigstens eine erste Wärmeübertrager (3) als Direktkontaktwärmeübertrager zwischen der Wärmeübertragungsflüssigkeit und einem ersten Luftstrom in dem ersten Lüftungskanal (5) ausgebildet ist, dass der wenigstens eine zweite Wärmeübertrager (4) als Direktkontaktwärmeübertrager zwischen der Wärmeübertragungsflüssigkeit und einem zweiten Luftstrom in dem zweiten Lüftungskanal (6) ausgebildet ist, dass das Wärmerückgewinnungssystem eine in dem wenigstens einen Wärmeübertragungskreislauf (2) angeordnete hygroskopische Wärmeübertragungsflüssigkeit umfasst, und dass die Wärmeübertragungsflüssigkeit eine ionische Flüssigkeit umfasst.

## Beschreibung

Die Erfindung betrifft eine Wärmerückgewinnungssystem gemäß dem Oberbegriff des Patentanspruches 1.

Es sind Wärmerückgewinnungsvorrichtungen bekannt, welche bei Gebäudelüftungsanlagen verwendet werden, und welche vorgesehen sind einen Wärmeausgleich zwischen einem in das Gebäude führenden Außenluft-Luftsstrom und einem aus dem Gebäude führenden Abluft-Luftsstrom zu sorgen. Dadurch kann ansonsten verloren gegangene Wärmeenergie oder Kältepotenzial zumindest zum Teil zurückgewonnen werden, wodurch der Energieverbrauch der gesamten Lüftungsanlage verringert werden kann. Für derartige Wärmerückgewinnungsvorrichtungen sind verschiedene Systeme bekannt.

Ein bekanntes System ist das Kreislaufverbundsystem. In diesen Kreislaufverbundsystemen sind in dem Außenluft-Luftsstrom und dem Abluft-Luftsstrom als Rekuperator ausgebildete Wärmeübertrager angeordnet, wobei zwischen den beiden Wärmeübertragern ein Wärmetransport über eine Flüssigkeit erfolgt, in der Regel Wasser oder ein Wasser-Glykol Gemisch. Vorteilhaft an diesem System ist, dass die beiden Luftströme zuverlässig voneinander getrennt sind. Allerdings lässt sich dadurch nur sensible Wärme übertragen, wodurch die Effizienz der Kreislaufverbundsysteme begrenzt ist.

Ein weiteres bekanntes System sind Rotationswärmeübertrager, welche nach dem Prinzip der Regeneratoren arbeiten. In diesen Rotationswärmeübertrager strömt der Außenluft-Luftsstrom und der Abluft-Luftsstrom an zwei verschiedenen Stellen durch eine rotierende Scheibe. Durch die Rotation der Scheibe wird deren Material abwechselnd mit dem Außenluft-Luftsstrom und dem Abluft-Luftsstrom in Kontakt gebracht, wodurch eine Wärmeübertragung und zu gewissen Teilen eine Übertragung von Luftfeuchtigkeit zwischen den beiden Luftströmen erfolgt. Vorteilhaft an diesem System ist die höhere Effizienz, da neben sensibler Wärme auch latente Wärme sowie Feuchtigkeit zwischen den beiden Luftströmen übertragbar sind. Allerdings sind die beiden Luftströme technisch nur bedingt voneinander trennbar, wodurch es zu unerwünschten Leckströmen kommt. Rotationswärmeübertrager, welche derartige Leckströme reduzieren, sind zwar bekannt, aber sehr aufwendig.

Aufgabe der Erfindung ist es daher ein Wärmerückgewinnungssystem der eingangs genannten Art anzugeben, mit welcher die genannten Nachteile vermieden werden können, mit welcher die beiden Luftströme zuverlässig voneinander getrennt werden können, und trotzdem eine besonders hohe Effizienz der Wärmeübertragung möglich ist.

Erfindungsgemäß wird dies durch die Merkmale des Patentanspruches 1 erreicht.

Dadurch ergibt sich der Vorteil, dass die beiden Luftströme zuverlässig voneinander getrennt bleiben, wobei über die Wärmeübertragungsflüssigkeit nicht nur eine Übertragung von sensibler Wärme zwischen den beiden Luftströmen kommt, sondern die Wärmeübertragungsflüssigkeit ebenfalls direkt Wasser aus den Luftströmen aufnehmen oder an diese abgeben kann, wodurch ebenfalls ein Ausgleich der Feuchtigkeit und eine zusätzliche Übertragung von latenter Wärmeenergie erfolgt. Die latente Wärmeenergie ist hierbei jene Energie, welche bei der Absorption von Wasserdampf aus einem der Luftströme in der Wärmeübertragungsflüssigkeit freigesetzt wird und beim Verdampfen von Wasser aus der Wärmeübertragungsflüssigkeit aufgenommen wird. Dadurch kann die Effizienz der Wärmeübertragung wesentlich gesteigert werden, wobei der Aufbau weiterhin einfach gehalten werden kann. Durch die Übertragung der Feuchtigkeit zwischen den beiden Luftströmen kann weiters der Aufwand einer nachfolgenden Luftbefeuchtung oder Lufttrocknung in der Lüftungsanlage gering gehalten werden. Ein weiterer Vorteil ist, dass die Wärmerückgewinnungsvorrichtung ohne Umbau sowohl bei sommerlichen Witterungen als auch winterlichen Witterungen eingesetzt werden kann, wodurch die Wärmerückgewinnungsvorrichtung vielfältig einsetzbar ist. Die ionische Flüssigkeit hat unter anderem den Vorteil, dass deren chemische Eigenschaften durch die Wahl des Anions oder Kations gut vorgebbar ist. Weiters weist die ionische Flüssigkeit oftmals einen sehr geringen Dampfdruck auf, wodurch diese beim Gebrauch in der Wärmerückgewinnungsvorrichtung nicht oder nur vernachlässigbar langsam verdampft. Da die ionische Flüssigkeit bei einem Verdampfen des Wassers im Gegensatz zu einer Salzlösung nicht auskristallisiert, besteht nicht die Gefahr, dass Leitungen verstopft werden. Weiters können ionische Flüssigkeit chemisch sehr stabil sein, wodurch die Wärmerückgewinnungsvorrichtung wartungsarm ausgebildet werden kann.

Die Erfindung betrifft weiters ein Verfahren zur Wärmerückgewinnung gemäß dem Patentanspruch 8.

Aufgabe der Erfindung ist es daher weiters ein Verfahren zur Wärmerückgewinnung anzugeben, mit welcher die genannten Nachteile vermieden werden können, mit welcher die beiden Luftströme zuverlässig voneinander getrennt werden können, und trotzdem eine besonders hohe Effizienz der Wärmeübertragung möglich ist.

Die Vorteile des Verfahrens entsprechend den Vorteilen des Wärmerückgewinnungssystems.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform der Wärmerückgewinnungsvorrichtung als Prinzipskizze;
Fig. 2 eine zweite bevorzugte Ausführungsform der Wärmerückgewinnungsvorrichtung als Prinzipskizze; und
Fig. 3 eine dritte bevorzugte Ausführungsform der Wärmerückgewinnungsvorrichtung als Prinzipskizze.

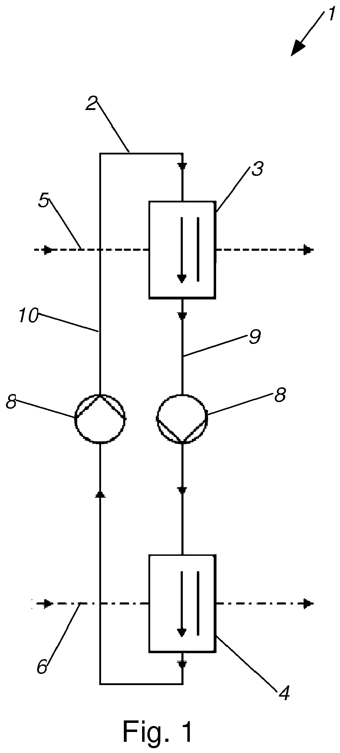

Die Fig. 1 bis 3 zeigen bevorzugte Ausführungsformen eines Wärmerückgewinnungssystems umfassend eine Wärmerückgewinnungsvorrichtung 1 für eine Lüftungsanlage, wobei die Wärmerückgewinnungsvorrichtung 1 wenigstens einen Wärmeübertragungskreislauf 2 mit wenigstens einem ersten Wärmeübertrager 3 und wenigstens einem zweiten Wärmeübertrager 4 umfasst, wobei der wenigstens eine Wärmeübertragungskreislauf 2 zum Zirkulieren einer Wärmeübertragungsflüssigkeit zwischen dem wenigstens einen ersten Wärmeübertrager 3 und dem wenigstens einen zweiten Wärmeübertrager 4 ausgebildet ist.

Eine Lüftungsanlage ist eine Anlage zum Belüften von Gebäuden. Die Lüftungsanlage hat üblicherweise einen Außenluftkanal, mit welchem Frischluft von Außen kontrolliert in das Gebäude gebracht wird, und einen Abluftkanal, mit welchem verbrauchte Luft aus dem Gebäude nach Außen abtransportiert wird.

Die Wärmerückgewinnungsvorrichtung 1 ist dazu vorgesehen, eine Wärmeübertragung zwischen dem Außenluftkanal und dem Abluftkanal durchzuführen, wodurch im Winter die Wärmeenergie aus der Abluft rückgewonnen werden kann, oder im Sommer, wenn die Außenluft wärmer als die Abluft ist, die Abluft die Außenluft vorkühlen kann. Die Wärmeenergie kann auch als thermische Energie bezeichnet werden. Dadurch kann die benötigte Energie zum Temperieren der Luft im Gebäude verringert werden. Das Wärmerückgewinnungssystem ist die Gesamtheit aus der Wärmerückgewinnungsvorrichtung 1 und der in der Wärmerückgewinnungsvorrichtung 1 zirkulierenden Wärmeübertragungsflüssigkeit.

Für diese Wärmeübertragung zwischen den beiden Luftströmen ist wenigstens ein Wärmeübertragungskreislauf 2 mit wenigstens einem ersten Wärmeübertrager 3 und wenigstens einem zweiten Wärmeübertrager 4 vorgesehen, wobei ein Wärmetransport zwischen den beiden Wärmeübertragern 3,4 über eine zirkulierende Wärmeübertragungsflüssigkeit erfolgt. Wärmeübertrager 3,4 sind auch unter dem Begriff Wärmetauscher oder Wärmeaustauscher bekannt. Die Wärmeübertrager 3,4 sind Apparate, in denen Wärme von einem fluiden Medium, beispielsweise Gase oder Flüssigkeiten, höherer Eintrittstemperatur stetig an ein Medium niedrigerer Eintrittstemperatur übertragen wird.

Die Wärmeübertragungsflüssigkeit ist eine Flüssigkeit, welche dazu vorgesehen ist Wärmenergie zu speichern und zwischen dem wenigstens einen ersten Wärmeübertrager 3 und dem wenigstens einen zweiten Wärmeübertrager 4 zu transportieren.

Der wenigstens eine Wärmeübertragungskreislauf 2 kann insbesondere eine erste Wärmeübertragungskreislaufleitung 9 aufweisen, welche einen Ausgang des wenigstens einen ersten Wärmeübertragers 3 mit einem Eingang des wenigstens einen zweiten Wärmeübertragers 4 verbindet. Der wenigstens eine Wärmeübertragungskreislauf 2 kann insbesondere eine zweite Wärmeübertragungskreislaufleitung 10 aufweisen, welche einen Ausgang des wenigstens einen zweiten Wärmeübertragers 4 mit einem Eingang des wenigstens einen ersten Wärmeübertragers 3 verbindet. In den Wärmeübertragungskreislaufleitungen 9,10 kann der Transport der Wärmeübertragungsflüssigkeit zwischen den Wärmeübertragern 3,4 erfolgen.

In dem wenigstens einen Wärmeübertragungskreislauf 2 kann wenigstens eine Pumpe 8 für die Wärmeübertragungsflüssigkeit vorgesehen sein, um die Wärmeübertragungsflüssigkeit in dem wenigstens einen Wärmeübertragungskreislauf 2 zu zirkulieren. Insbesondere können mehrere Pumpen 8 vorgesehen sein. Besonders bevorzugt kann im Wesentlichen nach jedem Wärmeübertrager 3,4 eine Pumpe 8 vorgesehen sein.

In den Fig. 1 bis 3 wird der wenigstens eine Wärmeübertragungskreislauf 2 symbolisch durch die durchgehende Linie dargestellt, wobei die Pfeile in der Linie die Fließrichtung der Wärmeübertragungsflüssigkeit darstellen.

Vorgesehen ist, dass ein erster Lüftungskanal 5 durch den wenigstens einen ersten Wärmeübertrager 3 führt, wobei ein, vom ersten Lüftungskanal 5 getrennter, zweiter Lüftungskanal 6 durch den wenigstens einen zweiten Wärmeübertrager 4 führt. Die Wärmerückgewinnungsvorrichtung 1 weist einen ersten Lüftungskanal 5 zum Durchleiten eines ersten Luftstroms und einen zweiten Lüftungskanal 6 zum Durchleiten eines zweiten Luftstroms auf, wobei der erste Lüftungskanal 5 und der zweite Lüftungskanal 6 voneinander getrennt sind, sodass sich der erste Luftstrom und der zweite Luftstrom nicht miteinander vermischen. Dass der erste Lüftungskanal 5 durch den wenigstens einen ersten Wärmeübertrager 3 führt bedeutet, dass der erste Luftstrom durch den ersten Wärmeübertrager 3 strömt und es in dem wenigstens einen ersten Wärmeübertrager 3 zu einer Übertragung von Wärme und Feuchtigkeit zwischen dem erste Luftstrom und der Wärmeübertragungsflüssigkeit kommt. Dass der zweite Lüftungskanal 6 durch den wenigstens einen zweiten Wärmeübertrager 4 führt bedeutet, dass der zweite Luftstrom durch den zweiten Wärmeübertrager 4 strömt und es in dem wenigstens einen zweiten Wärmeübertrager 4 zu einer Übertragung von Wärme und Feuchtigkeit zwischen dem zweiten Luftstrom und der Wärmeübertragungsflüssigkeit kommt.

In den Fig. 1 bis 3 wird der erste Lüftungskanal 5 symbolisch durch eine strichlinierte Linie dargestellt, wobei die Pfeile die Flussrichtung des ersten Luftstromes darstellen. Der zweite Lüftungskanal 6 wird symbolisch durch eine strichpunktierte Linie dargestellt, wobei die Pfeile die Flussrichtung des zweiten Luftstromes darstellen.

Der erste Lüftungskanal 5 kann insbesondere der Außenluftkanal sein, wobei der zweite Lüftungskanal 6 der Abluftkanal ist.

Es kann aber auch vorgesehen sein, dass der erste Lüftungskanal 5 der Abluftkanal ist, wobei der zweite Lüftungskanal 6 der Außenluftkanal ist.

Die Wärmerückgewinnungsvorrichtung 1 kann insbesondere derart ausgebildet sein, dass der erste Lüftungskanal 5 wahlweise als Abluftkanal oder als Außenluftkanal verwendet werden kann, wobei dann der zweite Lüftungskanal 6 der Außenluftkanal beziehungsweise der Abluftkanal ist.

Vorgesehen ist, dass der wenigstens eine erste Wärmeübertrager 3 als Direktkontaktwärmeübertrager zwischen der Wärmeübertragungsflüssigkeit und einem ersten Luftstrom in dem ersten Lüftungskanal 5 ausgebildet ist, und dass der wenigstens eine zweite Wärmeübertrager 4 als Direktkontaktwärmeübertrager zwischen der Wärmeübertragungsflüssigkeit und einem zweiten Luftstrom in dem zweiten Lüftungskanal 6 ausgebildet ist.

Ein Direktkontaktwärmeübertrager, oft auch als Direktkontaktwärmetauscher bezeichnet, ist ein Wärmeübertrager 3,4, bei welchem die Wärmeübertragungsflüssigkeit in direktem Kontakt mit dem jeweiligen Luftstrom ist, wodurch die Wärmeübertragungsflüssigkeit Wasser aus dem jeweiligen Luftstrom aufnehmen oder an diesen abgeben kann. Hierbei kann die Wärmeübertragungsflüssigkeit hygroskopisch sein, also eine Flüssigkeit, welche aus den Luftströmen Wasser aufnehmen, also absorbieren, oder an die Luftströme Wasser abgeben, also desorbieren, kann. Die Wärmeübertragungsflüssigkeit dient daher, neben der Wärmeübertragung, auch der Feuchtigkeitsübertragung zwischen den beiden Luftströmen. Die Wärmeübertragungsflüssigkeit kann daher auch als Enthalpieübertragungsflüssigkeit bezeichnet werden. Der Wassergehalt der Wärmeübertragungsflüssigkeit ändert sich hierbei bei Kontakt mit den Luftströmen. Aufgrund der unterschiedlichen Wasserpartialdrücke in der Wärmeübertragungsflüssigkeit und der Luft des jeweiligen Luftstroms entsteht ein Nettotransport von Wasser zwischen dem jeweiligen Luftstrom und der Wärmeübertragungsflüssigkeit in dem jeweiligen Wärmeübertrager 3,4. Durch den Transport der Wärmeübertragungsflüssigkeit zwischen den beiden Wärmeübertragern 3,4 erfolgt auch eine Übertragung der Feuchtigkeit zwischen den beiden Luftströmen über die Wärmeübertragungsflüssigkeit, wodurch die Wärmerückgewinnungsvorrichtung 1 auch eine Feuchtigkeitsübertragung, beziehungsweise eine Feuchterückgewinnung durchführt. Die Wärmerückgewinnungsvorrichtung 1 kann daher auch als Wärme- und Feuchterückgewinnungsvorrichtung bezeichnet werden.

Weiters ist vorgesehen, dass das Wärmerückgewinnungssystem eine in dem wenigstens einen Wärmeübertragungskreislauf 2 angeordnete hygroskopische Wärmeübertragungsflüssigkeit umfasst, und dass die Wärmeübertragungsflüssigkeit eine ionische Flüssigkeit umfasst. Die Wärmeübertragungsflüssigkeit kann bevorzugt eine ionische Flüssigkeit sein. Ionische Flüssigkeiten sind noch bei niederen Temperaturen flüssige Salze, mit relativ niedriger Viskosität. Die ionischen Flüssigkeiten sind daher von wässerigen Salzlösungen, bei welchen feste Salze in Wasser gelöst sind, zu unterscheiden. Der niedere Schmelzpunkt der ionischen Flüssigkeiten wird oftmals durch eine Kombination von anorganischen Ionen mit organischen Kationen erreicht. Im Gegensatz zu einer wässrigen Salzlösung bleibt eine ionische Flüssigkeit auch dann flüssig, wenn das Wasser verdampft ist.

Die Wärmeübertragungsflüssigkeit kann insbesondere im Wesentlichen aus der ionischen Flüssigkeit und dem in der ionischen Flüssigkeit gelösten Wasser bestehen.

Weiters ist ein Verfahren zur Wärmerückgewinnung in einer Lüftungsanlage vorgesehen, wobei in dem wenigstens einen Wärmeübertragungskreislauf 2 eine hygroskopische Wärmeübertragungsflüssigkeit zwischen dem wenigstens einen ersten Wärmeübertrager 3 und dem wenigstens einen zweiten Wärmeübertrager 4 zirkuliert wird, wobei die Wärmeübertragungsflüssigkeit in dem wenigstens einen ersten Wärmeübertrager 3 mit dem ersten Luftstrom in direkten Kontakt gebracht wird, und in dem wenigstens einem zweiten Wärmeübertrager 4 mit dem zweiten Luftstrom in direkten Kontakt gebracht wird, wobei Wärme und Feuchtigkeit zwischen dem ersten Luftstrom und dem zweiten Luftstrom über die Wärmeübertragungsflüssigkeit übertragen wird, wobei eine Wärmeübertragungsflüssigkeit umfassend eine ionische Flüssigkeit verwendet wird.

Dadurch ergibt sich der Vorteil, dass die beiden Luftströme zuverlässig voneinander getrennt bleiben, wobei über die Wärmeübertragungsflüssigkeit nicht nur eine Übertragung von sensibler Wärme zwischen den beiden Luftströmen kommt, sondern die Wärmeübertragungsflüssigkeit ebenfalls direkt Wasser aus den Luftströmen aufnehmen oder an diese abgeben kann, wodurch ebenfalls ein Ausgleich der Feuchtigkeit und eine zusätzliche Übertragung von latenter Wärmeenergie erfolgt. Die latente Wärmeenergie ist hierbei jene Energie, welche bei der Absorption von Wasserdampf aus einem der Luftströme in der Wärmeübertragungsflüssigkeit freigesetzt wird und beim Verdampfen von Wasser aus der Wärmeübertragungsflüssigkeit aufgenommen wird. Dadurch kann die Effizienz der Wärmeübertragung wesentlich gesteigert werden, wobei der Aufbau weiterhin einfach gehalten werden kann. Durch die Übertragung der Feuchtigkeit zwischen den beiden Luftströmen kann weiters der Aufwand einer nachfolgenden Luftbefeuchtung oder Lufttrocknung in der Lüftungsanlage gering gehalten werden. Ein weiterer Vorteil ist, dass die Wärmerückgewinnungsvorrichtung 1 ohne Umbau sowohl bei sommerlichen Witterungen als auch winterlichen Witterungen eingesetzt werden kann, wodurch die Wärmerückgewinnungsvorrichtung vielfältig einsetzbar ist. Die ionische Flüssigkeit hat unter anderem den Vorteil, dass deren chemische Eigenschaften durch die Wahl des Anions oder Kations gut vorgebbar ist. Weiters weist die ionische Flüssigkeit oftmals einen sehr geringen Dampfdruck auf, wodurch diese beim Gebrauch in der Wärmerückgewinnungsvorrichtung 1 nicht oder nur vernachlässigbar langsam verdampft. Da die ionische Flüssigkeit bei einem Verdampfen des Wassers im Gegensatz zu einer Salzlösung nicht auskristallisiert, besteht nicht die Gefahr, dass Leitungen verstopft werden. Weiters können ionische Flüssigkeit chemisch sehr stabil sein, wodurch die Wärmerückgewinnungsvorrichtung 1 wartungsarm ausgebildet werden kann.

Besonders bevorzugt kann vorgesehen sein, dass der Wassergehalt in der Wärmeübertragungsflüssigkeit größer als 5 Gew-%, insbesondere größer 20 Gew-%, besonders bevorzugt größer 30 Gew-% ist.

Weiters kann vorgesehen sein, dass der Wassergehalt in der Wärmeübertragungsflüssigkeit kleiner als 80 Gew-% ist.

Insbesondere kann vorgesehen sein, dass als Wärmeübertragungsflüssigkeit eine Flüssigkeit verwendet wird, welche bei Temperaturen über -30°C, insbesondere über -20°C, nicht kristallisiert. Dadurch kann die Wärmerückgewinnungsvorrichtung 1 auch im Winter zuverlässig betrieben werden.

Weiters kann vorgesehen sein, dass die Wärmeübertragungsflüssigkeit nicht oder nur geringfügig korrosiv ist. Dadurch kann die Wartung der Wärmerückgewinnungsvorrichtung 1 gering gehalten werden.

Weiters kann vorgesehen sein, dass als Wärmeübertragungsflüssigkeit eine antibakterielle Flüssigkeit verwendet wird. Dadurch kann verhindert werden, dass in der Wärmerückgewinnungsvorrichtung 1 sich Krankheitskeime vermehren können, welche zu einer Keimbelastung der Frischluft in dem Gebäude führen können. Dadurch kann auch auf den Einbau zusätzlicher Biofilter verzichtet werden.

Hierbei kann die Wärmeübertragungsflüssigkeit inhärent antibakterielle oder antimikrobiotische sein. Dies kann insbesondere dadurch erfolgen, dass in der Wärmeübertragungsflüssigkeit aufgrund eines hohen osmotischen Druckes auf die Zellwand eines Bakteriums oder eines anderen Mikroorganismus diese abgetötet werden.

Weiters kann die Wärmeübertragungsflüssigkeit antibakterielle oder antimikrobiotische Zusätze umfassend, welcher einer Verkeimung der Wärmeübertragungsflüssigkeit entgegenwirken.

Bevorzugt kann vorgesehen sein, dass ein Wasserpartialdruck der Wärmeübertragungsflüssigkeit kleiner als 50 mbar, insbesondere kleiner als 30 mbar, ist.

Besonders bevorzugt kann vorgesehen sein, dass für die Wärmeübertragungsflüssigkeit eine hygroskopische ionische Flüssigkeit verwendet wird. Ionische Flüssigkeiten haben hierbei den Vorteil, dass bei deren Herstellung die Wasserpartialdampfdrücke maßgeschneidert an die Anwendungen angepasst werden können. Hierbei kann eine ionische Flüssigkeit verwendet werden, deren Wasserpartialdampfdrücke derart eingestellt sind, dass eine ausreichende Absorption bzw. Desorption bei üblichen Umweltbedingungen erreicht werden kann.

Die Wahl dieser Wasserpartialdampfdrücke wird anhand eines Beispiels erläutert. Bei einer typischen Außenlufttemperatur von 5°C und einer typischen spezifischen Außenluft-Luftfeuchte von 4g/kg-trockener Luft ist der Wasserpartialdampfdruck in Luft ca. 6,4 mbar. Bei einer typischen Ablufttemperatur von 20°C und einer Abluft-Luftfeuchte von 7,4 g/kg-trockener Luft ist der Wasserpartialdampfdruck in der Abluft ca. 12 mbar. Eine ionische Flüssigkeit kann hierbei insbesondere derart aufgebaut sein, dass sie in der Wärmerückgewinnungsvorrichtung 1 an einem Eingang des Wärmeübertragers 3,4 im Außenluft-Luftstrom einen Wasserpartialdampfdruck größer al 6,4 mbar besitzt und an einem Eingang des Wärmeübertragers 3,4 im Abluft-Luftstrom einen Wasserpartialdampfdruck niedriger als 12 mbar besitzt. Dadurch wird Wasser aus dem Abluft-Luftstrom in der Wärmeübertragungsflüssigkeit absorbiert und von der Wärmeübertragungsflüssigkeit in dem Außenluft-Luftstrom wieder desorbiert.

Weiters kann vorgesehen sein, dass die Wärmeübertragungsflüssigkeit eine niedrige Viskosität aufweist. Durch die niedrige Viskosität kann die Pumpleistung in vorteilhafter Weise gering gehalten werden.

Weiters kann vorgesehen sein, dass eine dynamische Viskosität der Wärmeübertragungsflüssigkeit während des Verfahrens kleiner als 60 mPas, bevorzugt kleiner als 20 mPas, ist.

Besonders bevorzugt kann vorgesehen sein, dass ein Wassergehalt und/oder eine Temperatur der Wärmeübertragungsflüssigkeit bei einem Transport von dem wenigstens einen ersten Wärmeübertrager 3 zu dem wenigstens einem zweiten Wärmeübertrager 4 und/oder von dem wenigstens einen zweiten Wärmeübertrager 4 zu dem wenigstens einem ersten Wärmeübertrager 3 im Wesentlichen unveränderlich bleibt. Dass der Wassergehalt und/oder die Temperatur der Wärmeübertragungsflüssigkeit bei diesem Transport im Wesentlichen unveränderlich bleibt bedeutet, dass eine natürliche und unvermeidbare Änderung der Temperatur oder der Feuchtigkeit bei Transport erfolgen kann, dass aber keine aktive Heizung oder Abkühlung, Befeuchtung oder Entfeuchtung der Wärmeübertragungsflüssigkeit auf dem Transport zwischen dem wenigstens einen ersten Wärmeübertrager 3 zu dem wenigstens einem zweiten Wärmeübertrager 4 oder umgekehrt erfolgt. Mit anderen Worten kann die Wärmeübertragungsflüssigkeit bevorzugt unmittelbar zwischen dem wenigstens einem ersten Wärmeübertrager 3 und wenigstens einem zweiten Wärmeübertrager 4 zirkuliert werden, ohne dass diese dazwischen einer aktiven Temperaturänderung und/oder Änderung der Feuchtigkeit, insbesondere der relativen Feuchtigkeit, unterzogen wird. Dadurch kann die Wärmerückgewinnungsvorrichtung 1 besonders einfach ausgebildet werden.

Weiters kann vorgesehen sein, dass der Wassergehalt und/oder die Temperatur der Wärmeübertragungsflüssigkeit bei einem Transport von einem Wärmeübertrager 3,4 zu dem jeweils nächsten Wärmeübertrager 3,4 im Wesentlichen unveränderlich bleibt.

Insbesondere kann vorgesehen sein, dass der erste Lüftungskanal 5 im Wesentlichen oberhalb des zweiten Lüftungskanals 6 angeordnet ist. Vorteilhaft daran ist, dass die Schwerkraft einen Transport der Wärmeübertragungsflüssigkeit von dem wenigstens einen ersten Wärmeübertrager 3 zu dem wenigstens einen zweiten Wärmeübertrager 4 unterstützt, wodurch Pumpen 8 eingespart werden können und die Wärmerückgewinnungsvorrichtung 1 einfacher aufgebaut werden kann.

Weiters kann vorgesehen sein, dass die Wärmeübertragungsflüssigkeit über einen Zyklus in dem wenigstens einen Wärmeübertragungskreislauf 2 betrachtet im Wesentlichen nicht verbraucht wird. Hierbei kann über einen Zyklus des wenigstens einen Wärmeübertragungskreislaufes 2 betrachtet das aus der Wärmeübertragungsflüssigkeit desorbierte und in dieser wieder absorbierte Wasser ausgeglichen sein, während weitere Bestandteile der Wärmeübertragungsflüssigkeit, insbesondere die ionische Flüssigkeit, nicht verdampfen. Dadurch erfolgt beim Betrieb der Wärmerückgewinnungsvorrichtung 1 im Wesentlichen kein Verbrauch an Wärmeübertragungsflüssigkeit.

Besonders bevorzugt kann vorgesehen sein, dass eine Bilanz der in den Wärmeübertrager 3,4 aufgenommenen oder abgegebenen Wassermenge und/oder Wärmeenergie über einen Zyklus des wenigstens einen Wärmeübertragungskreislaufes 2 betrachtet im Wesentlichen ausgeglichen ist. Dies bedeutet, dass die Aufnahme oder Abgabe von Wasser und/oder Wärmeenergie im Wesentlichen lediglich in den Wärmeübertragern 3,4 in den Lüftungskanälen 5,6 erfolgt.

Weiters kann eine Lüftungsanlage mit der Wärmerückgewinnungsvorrichtung 1 vorgesehen sein. Die Lüftungsanlage kann neben der Wärmerückgewinnungsvorrichtung 1 unter anderem einen Entfeuchter, eine Heizung, eine Kühlung oder ähnliche Vorrichtungen umfassen.

Bevorzugt kann vorgesehen sein, dass die Wärmerückgewinnungsvorrichtung 1 anschließend an einer ins Freie führende Außenöffnungen der Lüftungskanäle 5,6 angeordnet ist. Die Wärmerückgewinnungsvorrichtung 1 kann insbesondere die erste Station für die Außenluft und die letzte Station für die Abluft sein.

Weiters kann vorgesehen sein, dass die Wärmerückgewinnungsvorrichtung 1 als Nachrüstmodul für bestehende Lüftungsanlagen ausgebildet ist. Durch den Aufbau der Wärmerückgewinnungsvorrichtung 1 eignet sich diese besonders gut für eine Nachrüstung bestehender Lüftungsanlagen, da die Funktionsweise nachfolgender Vorrichtungen der Lüftungsanlagen durch die Wärmerückgewinnungsvorrichtung 1 kaum beeinträchtigt werden, und die Wärmerückgewinnungsvorrichtung 1 eine sehr kompakte Bauweise aufweisen kann. Dadurch eignet sich die Wärmerückgewinnungsvorrichtung 1 besonders gut für die Nachrüstung bestehender Lüftungsanlagen.

Für die Übertragung von Wärmeenergie und Feuchtigkeit zwischen den jeweiligen Luftströmen über die Wärmeübertragungsflüssigkeit ist vorgesehen, dass der wenigstens eine erste Wärmeübertrager 3 und der wenigstens eine zweite Wärmeübertrager 4 als Direktkontaktwärmeübertrager ausgebildet sind.

Insbesondere kann vorgesehen sein, dass in dem Direktkontaktwärmeübertrager ein Film aus der Wärmeübertragungsflüssigkeit gebildet wird, wobei der Luftstrom an diesem Film vorbei geführt wird. Dadurch kann einfach eine große Grenzfläche zwischen der Wärmeübertragungsflüssigkeit und der Luft gebildet werden. Im Gegensatz zu einer Sprühanlage wird die Wahrscheinlichkeit erheblich verringert, dass Wärmeübertragungsflüssigkeit mit dem Luftstrom mitgerissen wird.

Insbesondere kann der Direktkontaktwärmeübertrager einen Einlass und einen Auslass für die Wärmeübertragungsflüssigkeit aufweisen, wobei die Wärmeübertragungsflüssigkeit in dem Direktkontaktwärmeübertrager von dem Einlass zu dem Auslass fließt.

Bevorzugt kann vorgesehen sein, dass der Auslass für die Wärmeübertragungsflüssigkeit in dem Direktkontaktwärmeübertrager gasdicht ausgebildet ist. Dadurch kann verhindert werden, dass ein direkter Austausch von Luft zwischen den Lüftungskanälen über den wenigstens einen Wärmeübertragungskreislauf 2 erfolgt.

Besonders bevorzugt kann vorgesehen sein, dass der wenigstens eine erste Wärmeübertrager 3 und/oder der wenigstens eine zweite Wärmeübertrager 4 als Fallfilmmodul ausgebildet sind. Das Fallfilmmodul weist senkrecht verlaufende Objekte, insbesondere senkrecht verlaufenden Stangen und/oder Platten, zwischen welchen Luft durchströmen kann. Entlang den senkrecht verlaufenden Objekten gleitet ein dünner Film an Wärmeübertragungsflüssigkeit herab, wodurch eine besonders große Fläche zwischen Wärmeübertragungsflüssigkeit und Luft entsteht. Weiters kann die Wärmeübertragungsflüssigkeit einfach an einer Unterseite des wenigstens einen ersten Wärmeübertragers 3 und/oder des wenigstens einen zweiten Wärmeübertragers 4 gesammelt und abtransportiert werden.

Insbesondere kann vorgesehen sein, dass der wenigstens eine erste Wärmeübertrager 3 und/oder der wenigstens eine zweite Wärmeübertrager 4 als Kreuzstromwärmeübertrager ausgebildet sind. In dem Kreuzstromwärmeübertrager kreuzen sich der Strom an Wärmeübertragungsflüssigkeit und der Luftstrom und werden nicht parallel geführt. Dadurch lässt sich der Energieübertrag zwischen den beiden Strömen gut regulieren, insbesondere da die Fließgeschwindigkeit der Wärmeübertragungsflüssigkeit von dem Luftstrom nur geringfügig beeinflusst wird. Weiters kann dadurch die Wahrscheinlichkeit verringert werden, dass Wärmeübertragungsflüssigkeit von dem Luftstrom mitgerissen wird.

Insbesondere kann vorgesehen sein, dass die Wärmerückgewinnungsvorrichtung 1 lediglich einen Wärmeübertragungskreislauf 2 mit lediglich einem ersten Wärmeübertrager 3 und lediglich einem zweiten Wärmeübertrager 4 aufweist. Eine derartige bevorzugte Ausführungsform ist in Fig. 1 dargestellt.

Um die Effektivität zu erhöhen kann es vorteilhaft sein, die Wärmeübertragung zwischen den beiden Luftkanälen 5,6 mehrstufig auszubilden.

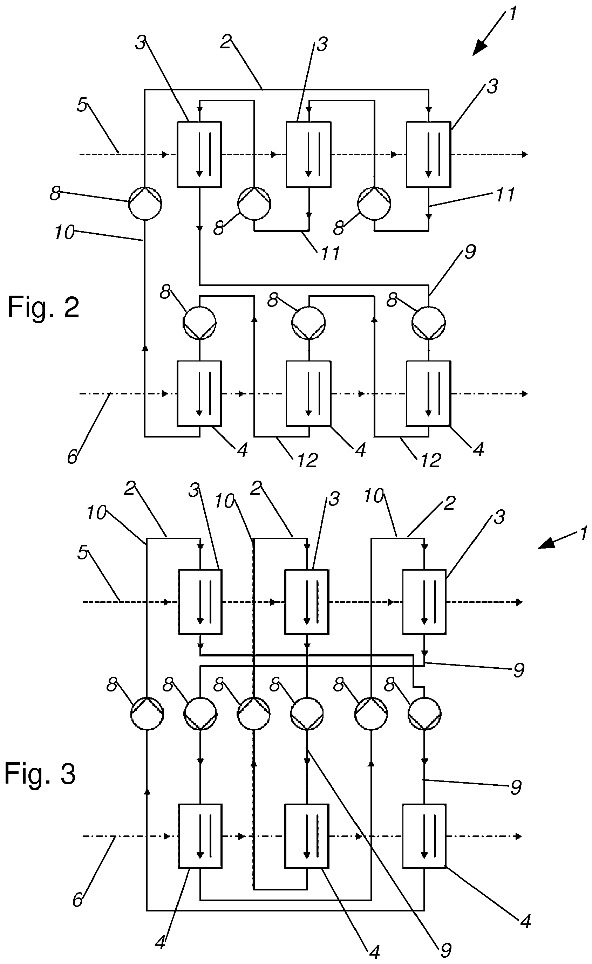

Bevorzugt kann vorgesehen sein, dass der wenigstens eine Wärmeübertragungskreislauf 2 eine Vielzahl an ersten Wärmeübertragern 3 und/oder eine Vielzahl an zweiten Wärmeübertragern 4 aufweist, wobei die ersten Wärmeübertrager 3 zu dem ersten Lüftungskanal 5 kreuzgegenstromartig angeordnet sind und/oder die zweiten Wärmeübertrager 4 zu dem zweiten Lüftungskanal 6 kreuzgegenstromartig angeordnet sind. Bei der kreuzgegenstromartigen Anordnung der ersten Wärmeübertrager 3 führt der erste Lüftungskanal 5 nacheinander durch die einzelnen ersten Wärmeübertrager 3, welche als Kreuzstromwärmeübertrager ausgebildet sind. Der wenigstens eine Wärmeübertragungskreislauf 2 führt hintereinander durch die einzelnen ersten Wärmeübertrager 3, wobei die Flussrichtung der Wärmeübertragungsflüssigkeit zwischen den einzelnen ersten Wärmeübertragern 3 als Gegenstrom zu dem ersten Luftstrom geführt wird. Bei der kreuzgegenstromartigen Anordnung der zweiten Wärmeübertrager 4 führt der zweite Lüftungskanal 6 nacheinander durch die einzelnen zweiten Wärmeübertrager 4, welche als Kreuzstromwärmeübertrager ausgebildet sind. Ein derart ausgebildeter Wärmeübertragungskreislauf 2 ist in Fig. 2 gezeigt. Durch die kreuzgegenstromartige Anordnung der ersten Wärmeübertrager 3 und/oder der zweiten Wärmeübertrager 4 kann eine besonders effiziente Wärmeübertragung zwischen den beiden Luftströmen erfolgen.

Insbesondere kann vorgesehen sein, dass die kreuzgegenstromartig angeordneten ersten Wärmeübertrager 3 mittels dritten Wärmeübertragungskreislaufleitungen 11 miteinander verbunden sind. In den dritten Wärmeübertragungskreislaufleitungen 11 können Pumpen 8 für die Wärmeübertragungsflüssigkeit vorgesehen sein.

Weiters kann vorgesehen sein, dass die kreuzgegenstromartig angeordneten zweiten Wärmeübertrager 4 mittels vierten Wärmeübertragungskreislaufleitungen 12 miteinander verbunden sind. In den vierten Wärmeübertragungskreislaufleitungen 12 können Pumpen 8 für die Wärmeübertragungsflüssigkeit vorgesehen sein.

Weiters kann vorgesehen sein, dass eine Vielzahl an Wärmeübertragungskreisläufen 2 vorgesehen sind, dass der erste Lüftungskanal 5 nacheinander in einer vorgegebenen Reihenfolge durch die einzelnen ersten Wärmeübertrager 3 der einzelnen Wärmeübertragungskreisläufe 2 führt, und dass der zweite Lüftungskanal 6 nacheinander in umgekehrter Reihenfolge durch die einzelnen zweiten Wärmeübertrager 4 der einzelnen Wärmeübertragungskreisläufe 2 führt. Die einzelnen Wärmeübertragungskreisläufe 2 können hierbei von der Wirkung ebenfalls wie ein Kreuzgegenstromwärmeübertrager wirken. Die umgekehrte Reihenfolge bedeutet, dass bei dem Wärmeübertragungskreislauf 2, bei welchem der erste Wärmeübertrager 3 einem Eingang des ersten Lüftungskanals 5 am nächsten ist, der zweite Wärmeübertrager 4 einem Ausgang des zweiten Lüftungskanals 6 am nächsten ist.

Eine derart ausgebildete Wärmerückgewinnungsvorrichtung 1 ist in Fig. 3 gezeigt. Vorteilhaft ist, dass dadurch ebenfalls die Wärmeübertragungseffizienz der Wärmerückgewinnungsvorrichtung 1 verbessert werden kann, wobei durch gezieltes ein und Ausschalten der einzelnen Wärmeübertragungskreisläufe 2 eine gute Regelung der Wärmeübertragungseffizienz erfolgen kann.

Gemäß einer nicht dargestellten Ausführungsform können eine Vielzahl an Wärmeübertragungskreisläufen 2 vorgesehen sein, wobei jeder Wärmeübertragungskreislauf 2 eine Vielzahl an ersten Wärmeübertragern 3 und/oder zweiten Wärmeübertragern 4 aufweist. Eine derartige Ausführungsform wäre eine Kombination der bevorzugten Ausführungsformen in den Fig. 2 und 3.

## Patentansprüche

1. Wärmerückgewinnungssystem umfassend eine Wärmerückgewinnungsvorrichtung (1) für eine Lüftungsanlage, wobei die Wärmerückgewinnungsvorrichtung (1) wenigstens einen Wärmeübertragungskreislauf (2) mit wenigstens einem ersten Wärmeübertrager (3) und wenigstens einem zweiten Wärmeübertrager (4) umfasst, wobei der wenigstens eine Wärmeübertragungskreislauf (2) zum Zirkulieren einer Wärmeübertragungsflüssigkeit zwischen dem wenigstens einen ersten Wärmeübertrager (3) und dem wenigstens einen zweiten Wärmeübertrager (4) ausgebildet ist, wobei ein erster Lüftungskanal (5) durch den wenigstens einen ersten Wärmeübertrager (3) führt, wobei ein, vom ersten Lüftungskanal (5) getrennter, zweiter Lüftungskanal (6) durch den wenigstens einen zweiten Wärmeübertrager (4) führt, **dadurch gekennzeichnet, dass** der wenigstens eine erste Wärmeübertrager (3) als Direktkontaktwärmeübertrager zwischen der Wärmeübertragungsflüssigkeit und einem ersten Luftstrom in dem ersten Lüftungskanal (5) ausgebildet ist, dass der wenigstens eine zweite Wärmeübertrager (4) als Direktkontaktwärmeübertrager zwischen der Wärmeübertragungsflüssigkeit und einem zweiten Luftstrom in dem zweiten Lüftungskanal (6) ausgebildet ist, dass das Wärmerückgewinnungssystem eine in dem wenigstens einen Wärmeübertragungskreislauf (2) angeordnete hygroskopische Wärmeübertragungsflüssigkeit umfasst, und dass die Wärmeübertragungsflüssigkeit eine ionische Flüssigkeit umfasst.

2. Wärmerückgewinnungssystem nach Anspruch 1, **dadurch gekennzeichnet, dass** der wenigstens eine erste Wärmeübertrager (3) und/oder der wenigstens eine zweite Wärmeübertrager (4) als Fallfilmmodul ausgebildet sind.

3. Wärmerückgewinnungssystem nach Anspruch 1 oder 2, **dadurch gekennzeichnet, dass** der wenigstens eine erste Wärmeübertrager (3) und/oder der wenigstens eine zweite Wärmeübertrager (4) als Kreuzstromwärmeübertrager ausgebildet sind.

4. Wärmerückgewinnungssystem nach einem der Ansprüche 1 bis 3, **dadurch gekennzeichnet, dass** der wenigstens eine Wärmeübertragungskreislauf (2) eine Vielzahl an ersten Wärmeübertragern (3) und/oder eine Vielzahl an zweiten Wärmeübertragern (4) aufweist, wobei die ersten Wärmeübertrager (3) zu dem ersten Lüftungskanal (5) kreuzgegenstromartig angeordnet sind und/oder die zweiten Wärmeübertrager (4) zu dem zweiten Lüftungskanal (6) kreuzgegenstromartig angeordnet sind.

5. Wärmerückgewinnungssystem nach einem der Ansprüche 1 bis 4, **dadurch gekennzeichnet, dass** eine Vielzahl an Wärmeübertragungskreisläufen (2) vorgesehen sind, dass der erste Lüftungskanal (5) nacheinander in einer vorgegebenen Reihenfolge durch die einzelnen ersten Wärmeübertrager (3) der einzelnen Wärmeübertragungskreisläufe (2) führt, und dass der zweite Lüftungskanal (6) nacheinander in umgekehrter Reihenfolge durch die einzelnen zweiten Wärmeübertrager (4) der einzelnen Wärmeübertragungskreisläufe (2) führt.

6. Wärmerückgewinnungssystem nach einem der Ansprüche 1 bis 5, **dadurch gekennzeichnet, dass** der erste Lüftungskanal (5) im Wesentlichen oberhalb des zweiten Lüftungskanals (6) angeordnet ist.

7. Lüftungsanlage mit einem Wärmerückgewinnungssystem nach einem der Ansprüche 1 bis 6.

8. Verfahren zur Wärmerückgewinnung in einer Lüftungsanlage, wobei in wenigstens einem Wärmeübertragungskreislauf (2) eine hygroskopische Wärmeübertragungsflüssigkeit zwischen wenigstens einem ersten Wärmeübertrager (3) und wenigstens einem zweiten Wärmeübertrager (4) zirkuliert wird, wobei die Wärmeübertragungsflüssigkeit in dem wenigstens einen ersten Wärmeübertrager (3) mit einem ersten Luftstrom in direkten Kontakt gebracht wird, und in dem wenigstens einem zweiten Wärmeübertrager (4) mit einem zweiten Luftstrom in direkten Kontakt gebracht wird, wobei Wärme und Feuchtigkeit zwischen dem ersten Luftstrom und dem zweiten Luftstrom über die Wärmeübertragungsflüssigkeit übertragen wird, wobei eine Wärmeübertragungsflüssigkeit umfassend eine ionische Flüssigkeit verwendet wird.

9. Verfahren nach Anspruch 8, **dadurch gekennzeichnet, dass** ein Wassergehalt und/oder eine Temperatur der Wärmeübertragungsflüssigkeit bei einem Transport von dem wenigstens einen ersten Wärmeübertrager (3) zu dem wenigstens einem zweiten Wärmeübertrager (4) und/oder von dem wenigstens einen zweiten Wärmeübertrager (4) zu dem wenigstens einem ersten Wärmeübertrager (3) im Wesentlichen unveränderlich bleibt.

10. Verfahren nach Anspruch 8 oder 9, **dadurch gekennzeichnet, dass** als Wärmeübertragungsflüssigkeit eine Flüssigkeit verwendet wird, welche bei Temperaturen über -30°C, insbesondere über -20°C, nicht kristallisiert.

11. Verfahren nach einem der Ansprüche 8 bis 10, **dadurch gekennzeichnet, dass** als Wärmeübertragungsflüssigkeit eine antibakterielle Flüssigkeit verwendet wird.
